(19) **Europäisches Patentamt**

**European Patent Office**

**Office européen des brevets**

(11) Veröffentlichungsnummer: **0 281 675 B1**

(12) **EUROPÄISCHE PATENTSCHRIFT**

(45) Veröffentlichungstag der Patentschrift: **19.02.92**

(51) Int. Cl.⁵: **F42C 13/02**, G01S 17/02, G01S 7/48

(21) Anmeldenummer: **87117424.9**

(22) Anmeldetag: **26.11.87**

(54) **Sensor zur Bekämpfung von Hubschraubern.**

(30) Priorität: **12.03.87 DE 3707888**

(43) Veröffentlichungstag der Anmeldung:
**14.09.88 Patentblatt 88/37**

(45) Bekanntmachung des Hinweises auf die Patenterteilung:
**19.02.92 Patentblatt 92/08**

(84) Benannte Vertragsstaaten:
**CH FR GB IT LI SE**

(56) Entgegenhaltungen:
**DE-A- 2 851 205     DE-A- 3 130 966
GB-A- 1 598 064     GB-A- 2 063 430
US-A- 4 245 559     US-A- 4 380 391**

(73) Patentinhaber: **Messerschmitt-Bölkow-Blohm
Gesellschaft mit beschränkter Haftung
Robert-Koch-Strasse
W-8012 Ottobrunn(DE)**

(72) Erfinder: **Born, Gunthard, Dr.
Donarweg 22
W-8000 München 83(DE)**
Erfinder: **Sepp, Gunther, Dr.
H.-Löns-Strasse 10
W-8012 Ottobrunn(DE)**

**Beschreibung**

Die Erfindung bezieht sich auf einen Sensor in einem Gefechtskopf eines Geschosses zur Bekämpfung von Hubschraubern auf oder nahe der Bodenoberfläche.

Durch die Anmelderin ist ein aktiver optischer Sensor zur Diskriminierung von in der Landschaft stehenden Feindzielen bekannt geworden, der in der Lage ist, Hubschrauber, Fahrzeuge, Panzer etc. vom Bodenuntergrund und der Bodenbewachsung zu unterscheiden und danach eine Zündauslösung durchzuführen. Dies wird dadurch erreicht, daß der Sendestrahl sowie der Empfängerstrahl im Zentimeter- oder Millimeterbereich gebündelt wird und die zeitliche Auflösung im Nanosekundenbereich liegt oder die Zielfläche mit hoher Frequenzfolge gescant wird.

Dieser Sensor hat sich bewährt, ist jedoch für sogenannte Annäherungssensoren in Gefechtsköpfen von Geschossen speziell gegen Hubschrauber nicht einsetzbar, da hierfür ein viel zu großer Aufwand erforderlich wäre.

Durch die DE-A-3 130 966 der Anmelderin ist ein Sensor gemäß dem Oberbegriff des Anspruches 1 bekanntgeworden, der elektromagnetische Wellen emittiert und nach dem Reflexionsprinzip arbeitet, wobei bewegte Ziele oder Zielteile aufgrunde einer Verbreiterung des ausgesandten Nadelimpulses detektiert werden. Hier kann jedoch nicht eindeutig zwischen Signalen von - beispielsweise dem Hubschrauberrumpf - und Signalen von den Rotorblättern unterschieden werden. Ähnliche Ausführungsformen sind durch die US-A-4 245 559 und die GB-A-2 063 430 bekanntgeworden. Alle diese Einrichtungen sind weder zeitlich und räumlich hochauflösbare Laserentfernungs-Meßgeräte noch ist es mit diesem Geräten möglich quantitiv auswertbare Meßergebnisse zu erzielen.

Durch die DE-A-2 851 205 ist ein Verfahren zur Idenfikation von Hubschraubern augrund seiner charakteristischen Energieabstrahlung im sichtbaren und Wärmestrahlungsbereich bekanntgeworden. Ein Gaslaser ist mit einem Identifikations-Sensor kombiniert und stellt mittels Heterodynempfang die Dopplerverschiebung fest. Dieses Ausführungsbeispiel ist nicht nur verfahrens- und gerätemäßig äußerst aufwendig sondern auch vom Raumbedarf nicht für Gefechtsköpfe verwendbar.

Der vorliegenden Erfindung liegt die Aufgabe zugrunde, einen Sensor der eingangs genannten Art zu schaffen, mit dem ein Geschoß, z.B. eine Granate, zur Hubschrauberbekämpfung eingesetzt werden kann, der auf oder nahe dem Bodenuntergrund detektiert wird, ohne daß der Sensor auf andere Scheinziele wie Bäume, Büsche, Felsen, Hütten etc. anspricht.

Diese Aufgabe wird durch die im Anspruch 1 aufgezeigten Maßnahmen gelöst. In den Unteransprüchen sind Ausgestaltungen und Weiterbildungen aufgezeigt, und in der nachfolgenden Beschreibung ist ein Ausführungsbeispiel erläutert und in den Figuren der Zeichnung dargestellt. Es zeigen:

Fig. 1    ein Schemabild einer ortenden Granate beim Flug über den Bodenuntergrund,

Fig. 2    eine Draufsicht auf einen Hubschrauber, wie ihn der Sensor der anfliegenden Granate detektiert, zusammen mit dem Draufsichtbild, wie es sich dem menschlichen Auge darstellt,

Fig. 3    ein Blockschaltbild des Sensors in schematischer Darstellung,

Fig. 4a    ein Diagramm des Entfernungssignals R(t) des Sensors, wie es sich aus der Darstellung in Fig. 1 und 2 ergibt,

Fig. 4b    ein Diagramm des entsprechenden Intensitätssignals I(t) gemäß Fig. 4a

Fig. 5    ein Blockschaltbild der Abschußanlage mit Schnittstelle.

Ausgehend von dem Problem, daß bisher bekannte Überflugsensoren auf aktiver optischer Basis nicht ausreichend zwischen einem Flugzeug oder Panzer und einem Busch ähnlicher Dimension unterscheiden können, zeigt nun die hier beschriebene Erfindung einen Weg, wie dieses Problem zuverlässig zu lösen ist. In erster Linie ist hierbei an die Bekämpfung von Hubschraubern gedacht, die nicht nur Infanterieverbände im Kampf aktiv und erfolgreich unterstützen, sondern auch Panzereinheiten. Hierzu fliegen sie knapp über dem Boden und vorwiegend in Deckung von naheliegenden Büschen und Bäumen, die hier ein Scheinziel darstellen und damit eine hohe Fehlauslösewahrscheinlichkeit bei ihrer Bekämpfung erzeugen.

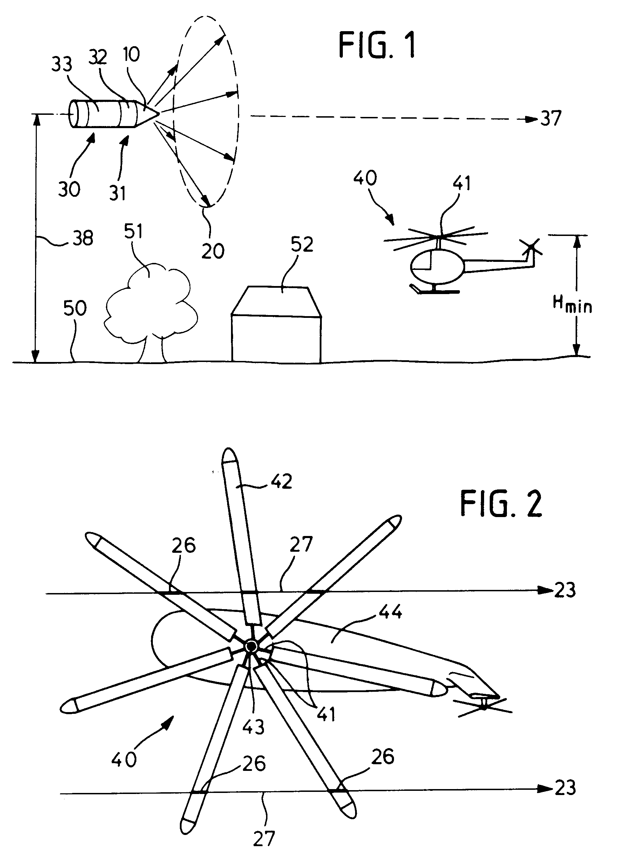

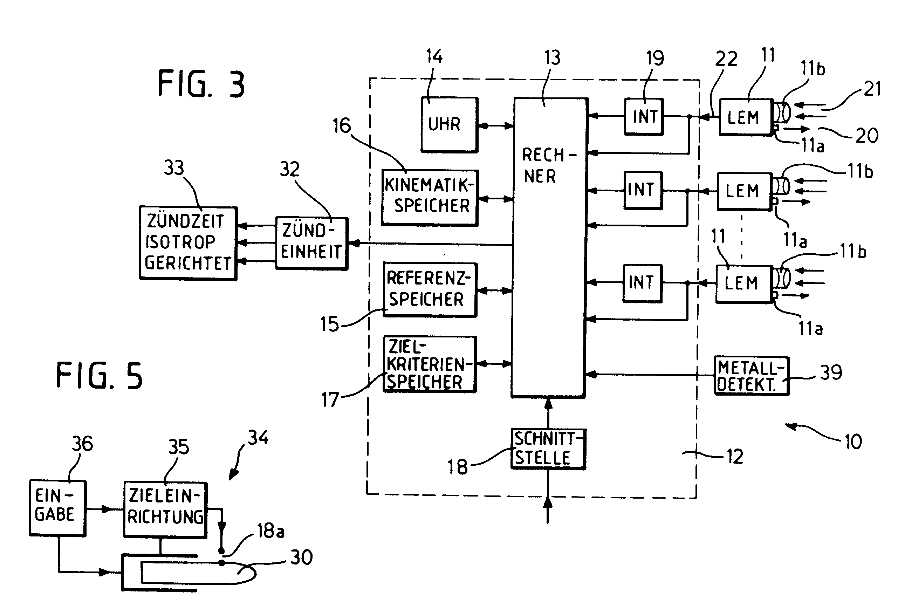

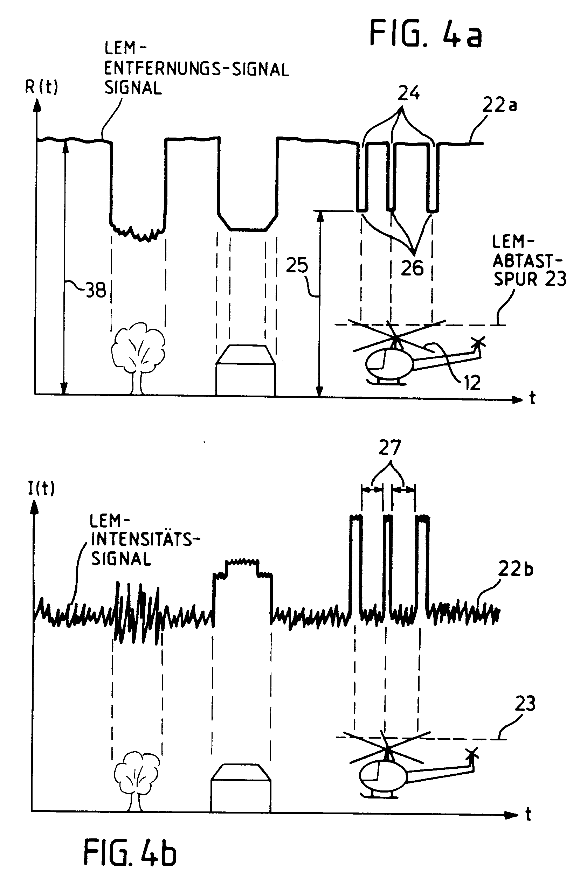

Dem hilft nunmehr die Erfindung dadurch ab, daß - wie in Fig. 1 gezeigt - das Geschoß 30, zum Beispiel eine Granate, auf dem Umfang ihres Gefechtskopfes 31 mit nach vorne geneigten LEM 11 versehen wird, denen eine Auswerteinheit 12 zugeordnet ist, die aus den von den Rotorblättern 42 rückgestreuten Signalen 21 (s. Fig. 2 und 3 ) sozusagen ein Erscheinungsbild schafft, das sie mit in ihr gespeicherten Referenzbildern von allen bekannten Hubschraubertypen vergleicht und im gegebenen Fall zu einem Zündsignal für die Zündeinheit 32 umformt. Da die Rotorblätter 42 sich meistens in horizontaler Ebene bewegen und die Flugbahn 37 des Geschosses 30 ebenfalls genähert horizontal verläuft, ergibt das als Signalintensität I(t) 22b und Entfernung R(t) 22a bestehende Signal 22 gewisse Abschnitte 26 annähernd gleicher Entfernung 25, die den abgetasteten Rotorblättern 42 entsprechen, und dazwischen liegende Abschnitte 27 größerer Entfernung, die der Entfernung zum Boden 50 im Zwischenraum zwischen den Rotorblättern 42 entsprechen (s. Fig. 4a, 4b). Da diese gemessenen Abschnitte signifikante Merkmale von Hubschraubern 40 sind, können sie durch Mustererkennung mittels der im Referenzspeicher 15 gespeicherten Referenzbilder problemlos und zuverlässig für die Identifikation derselben herangezogen werden.

In Fig. 3 ist schematisch der Sensoraufbau in einem Blockschaltbild gezeigt. Von einer Laserentfernungsmeßeinheit (LEM) 11, die vorzugsweise mit einem CW-Halbleiterlaser und dem bekannten Phasenmeßverfahren, einem enggebündelten Abtaststrahl 20, hoher Meßgeschwindigkeit und hoher Entfernungsgenauigkeit arbeitet, wird über eine Sendeoptik 11a der Ortungsstrahl 20 ausgesendet, und über eine Empfangsoptik 11b wird der rückgestreute Strahl 21 einem Detektor zugeführt. Trifft der ausgesendete Strahl 20 nun auf die Rotorblätter 42 eines Hubschraubers 40, so werden die detektierten Abschnitte 26, 27 (Fig. 2) der Auswerteinheit 12 zugeführt, dort mit den Referenzbildern in dem mit dem Rechner 13 verbundenen Referenzspeicher 15 verglichen und nach vollzogener Identifikation die Zündeinheit 32 aktiviert.

Die Fig. 4a und 4b veranschaulichen den Verlauf des LEM-Signals 22 beim Überflug des Geschosses 30 über das im Schemabild in Fig. 1 gezeigte Gelände. Es ist deutlich erkennbar, daß beispielsweise die Signaturen von Baum 51 und Haus 52 einander ähnlich sind und dies würde auch für den Hubschrauber 40 gelten, wenn nicht durch die vorbeschriebene Erfindung bei Verwendung hochpräziser LEM 11 die Möglichkeit geschaffen worden wäre, die Rotorblätter 42 zur Identifikation heranzuziehen. Dadurch wird auch die bisher eingehaltene Taktik unwirksam, Hubschrauber, die im Kampfeinsatz meistens knapp über dem Boden 50 fliegen, durch Bäume oder Sträucher weitgehend zu tarnen bzw. diese Bäume und Sträucher als "Deckung" zu verwenden, damit diese als Maskierung eines Nutzsignals dienen und so ein "Scheinsignal" zur Waffenauslösung abgeben.

Zur Mustererkennung prüft der Rechner 13 für jeden vorhandenen LEM 11, d.h. für jede Abtastspur 23 die Signale 22 auf die Fragen, ob jeweils alle oder zumindest mehrere der folgenden Zielkriterien erfüllt sind:

1. Sind mindestens ein oder mehrere kurze Entfernungssprünge 24 von mindestens der Größe $H_{min}$ vorhanden? $H_{min}$ ist hier der Entfernungssprung vom Boden 50 zum Rotor 41 des in Niedrigsthöhe schwebenden oder fliegenden Hubschraubers 40, d.h. $H_{min}$ ist bei Berücksichtigung der Vorwärtsneigung des LEM 11 etwas größer als die Bauhöhe des Hubschraubers 40.

Trifft das Kriterium zu, dann könnte der Abtaststrahl 20 des LEM 11 auf ein oder mehrere Hubschrauber-Rotorblätter 42 getroffen haben.

2. Sind mindestens zwei der bei den Entfernungssprüngen 24 gemessenen Entfernungen 25 annähernd gleich? In diesem Fall liegen die gemessenen Gegenstände auf einer zur Flugbahn 37 des Geschosses 30 genähert parallelen Geraden. Da sich der Rotor 41 eines langsam fliegenden Hubschraubers 40 genähert horizontal dreht und die Flugbahn 37 einer auf einen niedrig fliegenden Hubschrauber 40 abgefeuerten Geschosses 30 ebenfalls genähert horizontal verläuft, sind die angemessenen Gegenstände mit noch höherer Wahrscheinlichkeit zwei oder mehrere Rotorblätter 42 eines Hubschraubers 40.

3. Sind die von den mutmaßlichen Rotorblättern 42 rückgestreuten Laserintensitäten I(t) genähert gleich? Trifft dieses Kriterium zu, so ist auch hier eine sehr hohe Wahrscheinlichkeit gegeben, daß es sich um Rotorblätter 42 handelt, denn diese sind alle identisch.

4. Zeigen diese Laserintensitäten I(t) das gleiche gleichförmige Zeitverhalten? Auch dies ergibt sich aus der Homogenität der Oberfläche eines Rotorblattes 42. Blattwerk oder andere natürliche Oberflächen zeigen eine deutliche Strukturierung und damit bei Abtastung Intensitätsfluktuationen (s. Fig. 4b).

5. Passen die gemessenen Längen der mutmaßlichen Rotorblatt-Abschnitte 26 und die dazwischenliegenden Abschnitte 27 mit größerer Entfernung (zum Boden 50 bzw. bei Abtastung nahe dem Rotormittelpunkt 43 zum Hubschrauberrumpf 44) rechnerisch zu einer möglichen Abtastspur 23 eines möglichen Hubschraubertyps?

Treffen alle diese Zielkriterien innerhalb einer geringen Fehlerbandbreite zu, so ist mit an Sicherheit grenzender Wahrscheinlichkeit ein Hubschrauber 40 entdeckt worden. In der Regel ist jedoch eine ausreichend hohe Zielwahrscheinlichkeit auch dann gegeben, wenn größere Fehlerbandbreiten zugelassen werden oder wenn nur mehrere dieser Zielkriterien erfüllt sind.

Zur Nachprüfung des letzten Zielkriteriums, das die Geometrie des Rotors 41 nachprüft, entnimmt der Rechner 13 dem Referenzspeicher 15 für jeden gespeicherten Hubschraubertyp die Länge, Breite und Anzahl der Rotorblätter 42. Durch einfache Berechnung mittels algebraischer, trigonometrischer Formeln ergibt sich dann, ob ein bestimmter Rotortyp abgetastet wurde oder nicht, und wie gegebenenfalls die Abtastspur 23 bezüglich des Rotormittelpunktes 43 verläuft. Die absoluten Längen 26 der abgetasteten Gegenstände ergeben sich aus der momentanen Fluggeschwindigkeit v des Geschosses 30 und der Zeit t. Die momentane Fluggeschwindigkeit bestimmt der Rechner 13 näherungsweise aus der im Kinematikspeicher 16 gespeicherten, für das Geschoß 30 typischen Funktion v(t), dem ebenfalls gespeicherten Abschußzeitpunkt und der mit der Uhr 14 gemessenen seither verstrichenen Zeit.

Die solchermaßen gewonnene Kenntnis der relativen Lage der Abtastspur 23 bezüglich des Rotors 41 wird erfindungsgemäß zur Erhöhung der Trefferwirksamkeit benutzt. Hierzu wird eine der bekannten Methoden zur gerichteten Explosion des Gefechtskopfes 31 verwendet, z.B. der Zündung der speziell geformten Ladung an einer bestimmten Stelle. Die optimale Wirkrichtung ist dabei diejenige zum Rumpf 44 bzw. zu einem Punkt zwischen Rumpfmittelpunkt und Rotormittelpunkt 43. Der optimale Zündzeitpunkt ergibt sich aus der relativen Lage von Geschoß 30 und Hubschrauber 40 zum Zeitpunkt der Zielidentifikation, sowie der Geschwindigkeiten von Geschoß 30 und der Wirkteile des Gefechtskopfes 31 nach der Explosion. Die Vorwärtsneigung der LEM 11 ist nach diesen Gesichtspunkten unter Berücksichtigung der Rechengeschwindigkeit der Auswerteinheit 12 optimiert. Den Abstand des optimalen Zielpunktes vom Rotormittelpunkt 43 entnimmt der Rechner 13 wieder dem Referenzspeicher 15. Der Rotormittelpunkt 43 kann zunächst aus Symmetriegründen spiegelbildlich bezüglich der Abtastspur 23 auf beiden Seiten liegen. Verlaufen jedoch die Abtastspuren 23 zweier LEM 11 über den Rotor 41, so ist die Lage des Rotormittelpunktes 43 eindeutig festgelegt. Diese Eindeutigkeit kann allerdings auch bei nur einer Abtastspur 23 erhalten werden, wenn nämlich die Abtastspur auch über den Rumpf 44 des Hubschraubers 40 verläuft, d.h. der LEM-Abtaststrahl 20 z.B. schräg von oben kommt. Hier kann der Rechner 13 sogar nachprüfen, ob der gemessenen Entfernungssprung 24 zwischen Rotor 41 und Rumpf 44 mit der Geometrie des Hubschraubers 40 kompatibel ist, d.h. ob es sich tatsächlich um den Rumpf 44 handelt, falls auch dessen Geometrie im Referenzspeicher 15 enthalten ist.

Bisher wurde davon ausgegangen, daß die Flugbahn 37 des Geschosses 30 über dem Hubschrauber 40 liegt (Fig. 1, 2 und 4). Fliegt das Geschoß 30 unter dem Hubschrauber hindurch, wird die Zieldetektion noch einfacher, da ein Objekt, das ein nach oben blickender LEM 11 aus der typischen Flughöhe des Geschosses 30 erkennt, mit Sicherheit kein Scheinziel (Baum, Strauch usw.), sondern tatsächlich ein Hubschrauber 40 ist. In diesem Falle können die Zielkriterien also sehr stark vereinfacht werden.

Um die Blickrichtung eines LEM 11 festzustellen, werden dessen Signale 22 zusätzlich durch einen Integrator 19 aufintegriert. Dadurch wird zwar die Meßgeschwindigkeit verlangsamt, d.h. nur noch eine mittlere Entfernung angezeigt, jedoch aber auch die Reichweite des LEM 11 vergrößert und der typischen Flughöhe 38 des Geschosses 30 angepaßt. Damit wird die Blickrichtung 20 des LEM 11 zum Boden 50 bzw. in den Himmel erkennbar. Bei einem rollenden Geschoß 30 berechnet der Rechner 13 überdies die momentane Blickrichtung 20 aus der zeitlichen Extrapolation der periodisch veränderlichen mittleren Entfernungen R(t) zum Boden 50, wobei der für das Geschoß 30 typische (z.B. stetig abnehmende) Verlauf der Rollfrequenz aus diesen Entfernungen R(t) abgeleitet oder dem Kinematikspeicher 16 entnommen und verarbeitet wird.

Berücksichtigt man, daß die meisten Hubschrauber vier bis sieben Rotor blätter 42 aufweisen, und geht man z.B. bei einem nicht rollenden Geschoß 30 von zwei LEM 11, bei einem rollenden Geschoß 30 von sechs LEM 11 aus, so erkennt man, daß der vorgeschlagene Sensor 10 in den meisten Begegnungssituationen eine sehr hohe Auslöse- und eine sehr niedrige Fehlauslösewahrscheinlichkeit aufweist. In der Minderzahl der Fälle, in denen nur ein einziger Gegenstand abgetastet und als potentielles Rotorblatt 42 identifiziert wird, steigt zwar die Fehlauslösewahrscheinlichkeit an, die Auslösewahrscheinlichkeit jedoch bleibt auf ihrem hohen Niveau. In diesen oder in den noch selteneren Fällen, wenn gar kein Rotorblatt 42, sondern nur der Hubschrauberrumpf 44 abgetastet wird, oder wenn die Ablage des Geschosses 30 zu groß für eine ausreichend genaue Messung ist oder aus anderen Gründen die Richtung zum optimalen Zielpunkt nicht eindeutig bestimmt werden kann, löst der Rechner 13 anstelle der gerichteten eine ungerichtete Zündung, d.h. eine isotrope Gefechtskopfexplosion aus.

Um die Fehlauslösewahrscheinlichkeit des Sensors 10 weiter zu verringern und den Prozeß der Mustererkennung noch zu vereinfachen, werden noch zusätzliche erfindungsgemäße Maßnahmen getroffen (s. Fig. 5). So werden die Abschußanlage 34 und das Geschoß 30 mit einer Schnittstelle 18, z.B. in Form eines elektrischen Kontakts 18a versehen, über welche eine z.B. serielle Datenübertragung vor oder während des Abschusses Informationen zum Rechner 13 übertragen werden, die vorbekannte Erkenntnisse über das Ziel beinhalten. Diese Erkenntnisse können von der Zieleinrichtung 35 gewonnen oder vom Richtschützen selbst über die Eingabe 36 eingegeben worden sein. Ist z.B. der ungefähre Entfernungsbereich des Zieles bekannt und auf den Rechner 13 übertragen, so blockiert dieser die Zündeinheit 32 bis hierher und vermeidet damit eine etwaige Fehlauslösung vorher.

Ist der Typ des Hubschrauberziels bekannt und vor dem Abschuß auf den Rechner übertragen, so braucht dieser nur ein einziges Referenzmuster zu aktivieren. Bei genügender Vorkenntnis über Zieltyp, Zielbereich und Zielumgebung kann es sogar vorteilhaft sein, die Zielkriterien über die Schnittstelle 18 zu entschärfen, d.h. die zulässigen Fehlerbandbreiten zu erhöhen und die erforderliche Anzahl gleichzeitig zutreffender Zielkriterien zu vermindern, um die Auslösewahrscheinlichkeit noch weiter zu erhöhen, ohne daß die Fehlauslösewahrscheinlichkeit zu hoch wird.

Selbstverständlich können über die Schnittstelle 18 noch weitere, hier nicht mehr gesondert betrachtete Erkenntnisse eingebracht werden, wie z.B. der im Zielbereich zu erwartende kleine Winkel zwischen Flugbahn 37 des Geschosses 30 und der Rotorebene, der sich bei ansteigendem Gelände oder bei schnellem Vorwärtsflug bzw. Vorwärtsbeschleunigung des Hubschraubers 40 ergibt.

Hat der Sensor 10 nach Überschreiten des Zielentfernungsbereiches oder nach Unterschreiten der Mindestflughöhe $H_{min}$ des Geschosses 30 keinen Hubschrauber 40, d.h. kein Primärziel erkannt, so wird er automatisch auf Sekundärziele umgeschaltet. Hierzu aktiviert der Rechner 13 auch die im Referenzspeicher 15 zusätzlich enthaltenen Muster von Panzern und Fahrzeugen sowie entsprechend geänderte, meist vereinfachte Zielkriterien.

Schließlich ist der Gefechtskopf 31 noch mit einem an sich bekannten Metallsensor 39 ausgerüstet, der beim Vorbeiflug im Nächstbereich des Hubschraubers 40, d.h. im Abstand von bis zu 1 - 2m die Zündeinheit 32 aktiviert. Der Rechner 13 richtet dabei die Wirkrichtung des Gefechtskopfes 31 in die Richtung der kleinsten mit einem der LEM 11 gemessenen Entfernung aus.

Die Fluggeschwindigkeit einer Granate 30 liegt im mehrfachen Schallgeschwindigkeitsbereich, während die Blattspitzengeschwindigkeit der Rotorblätter 42 im Unterschallbereich liegt, so daß die sogenannten "Verschmierungen" des Zielbildes vernachlässigbar sind. Handelt es sich um ein langsames Geschoß 30, z.B. um einen mit Glasfaser oder Laserleitstrahl gelenkten Flugkörper, so werden im Referenzspeicher 15 zusätzlich noch der typische Drehzahlbereich und die Drehrichtung des Hubschrauberrotors 41 gespeichert und bei der Mustererkennung berücksichtigt.

## Patentansprüche

1. Sensor in einem Gefechtskopf eines Geschosses zur Bekämpfung von Hubschraubern auf oder nahe der Bodenoberfläche, wobei der Sensor elektromagnetische Wellen emittiert und nach dem Reflexionsprinzip arbeitet, **dadurch gekennzeichnet,** daß der Sensor (10) aus einem oder mehreren in Flugrichtung (37) nach vorne geneigten Laserentfernungsmessern (LEM) (11) besteht, welche zeitlich und räumlich derart hochauflösend sind, daß die einzelnen Rotorblätter auch bei Rotation erfaßbar sind, und mit einer diesen (LEM) zugeordneten Auswerteinheit (12) mit Uhr (14) und Rechner (13) versehen wird, welche aus den von den Rotorblättern (42) und dem Rumpf (44) des georteten Hubschraubers (40) rückgestreuten Signalen (21) und aus dem in einem Kinematikspeicher (16) gespeicherten "Geschwindigkeit/Flugzeit-Profil" des Geschosses (30) durch Mustererkennung anhand von im Referenzspeicher (15) gespeicherten Referenzmustern und der seit dem Abschuß des Geschosses (30) abgelaufenen Zeit die Richtung, Entfernung, Lage und daraus die Anwesenheit und die Type des georteten Hubschraubers (40) bestimmt und die Zündeinheit (32) der richtbaren Wirkladung (33) entsprechend aktiviert.

2. Sensor nach Anspruch 1, dadurch **gekennzeichnet,** daß der Referenzspeicher (15) die Anzahl, Länge und Breite der Rotorblätter (42) verschiedener Typen von Hubschraubern (40) enthält.

3. Sensor nach Anspruch 1 oder 2, dadurch **gekennzeichnet,** daß der Rechner (13) die Signale (22) des LEM (11) dann als von einem Hubschrauber (40) rückgestreute Signale (21) interpretiert, wenn diese alle oder mehrere der Zielkriterien erfüllen, nämlich

   a) wenn die Signale (22) mindestens zwei oder mehrere Entfernungssprünge (24) von mindestens der Größe $H_{min}$ anzeigen,
   b) wenn mindestens zwei der während der Entfernungssprünge (24) gemessenen Objektentfernungen (25) genähert gleich sind,
   c) wenn die gemäß b) dabei gemessenen Intensitäten I(t) genähert gleich hoch sind,
   d) wenn die gemessenen Intensitäten I(t) genähert das gleiche, gleichförmige Zeitverhalten zeigen,
   e) wenn die Längen (26) und Abstände (27) der durch die gemäß b) angezeigten Gegenstände einer möglichen Abtastspur (23) des Rotors (41) eines im Referenzspeicher (15) enthaltenen Hubschraubertyps hinreichend gut entsprechen.

4. Sensor nach Anspruch 3, dadurch **gekennzeichnet,** daß der Rechner (13) das Zielkriterium von Anspruch 3 e) durch algebraische Berechnung aus den gemessenen Längen (26) und Abständen (27) sowie der Länge, Breite und Anzahl der Rotorblätter (42) des betreffenden Hubschraubertyps nachprüft, die Lage des Rotormittelpunktes (43) berechnet und gegebenenfalls die Zündeinheit (32) aktiviert.

5. Sensor nach den Ansprüchen 1 bis 4, dadurch **gekennzeichnet,** daß durch Nachintegration (19) der Signale (22) des LEM (11) dessen Reichweite auf mindestens die typische Flughöhe (38) des Geschosses (30) vergrößert wird.

6. Sensor nach den Ansprüchen 1 bis 5, dadurch **gekennzeichnet,** daß der Rechner (13) aus dem zeitlichen Verhalten der Signale (22) nach der Nachintegration (19) eines oder mehrerer LEM (11) die momentane mittlere Flughöhe (38) des Geschosses (30) über dem Bodenuntergrund (50) sowie die jeweilige Blickrichtung des LEM (11) berechnet.

7. Sensor nach den Ansprüchen 1 bis 6, dadurch **gekennzeichnet,** daß der Rechner (13) aus der Lage der Rotormittelpunkte (43), dessen Abstand zum Mittelpunkt des Rumpfes (44) und aus der Blickrichtung des LEM (11) die Richtung und Entfernung zum Rumpf (44) bestimmt.

8. Sensor nach einem oder mehreren der Ansprüche 1 bis 7, dadurch **gekennzeichnet,** daß die Wirkladung (33) dem Gefechtskopfes (31) richtbar ist und der Rechner (13) gemäß dem Ergebnis der Mustererkennung den Zündzeitpunkt sowie die Wirkrichtung optimiert und die Zündeinheit (32) entsprechend aktiviert.

9. Sensor nach einem oder mehreren der Ansprüche 1 bis 8, dadurch **gekennzeichnet,** daß Abschußanlage (34) und Geschoß (30) mit einer Schnittstelle (18) zur Datenübertragung zum Sensor (10) vor oder während des Abschusses versehen sind.

10. Sensor nach einem oder mehreren der Ansprüche 1 bis 9, dadurch **gekennzeichnet,** daß die Schnittstelle (18) zur Datenübertragung eine über einen elektrischen Kontakt (18a) am Geschoß (30) geleitete serielle Schnittstelle ist.

11. Sensor nach einem oder mehreren der Ansprüche 1 bis 10, da durch **gekennzeichnet,** daß über die Schnittstelle (18) der vorbekannte Zielentfernungsbereich übertragen wird.

12. Sensor nach einem oder mehreren der Ansprüche 1 bis 11, dadurch **gekennzeichnet,** daß die Zündeinheit (32) vor Erreichen des Zielentfernungsbereiches blockiert wird.

13. Sensor nach einem oder mehreren der Ansprüche 1 bis 12, dadurch **gekennzeichnet,** daß über die Schnittstelle (18) ein oder mehrere Referenzmuster im Referenzspeicher (15) von Hubschraubertypen für die nachfolgende Mustererkennung aktiviert werden.

14. Sensor nach einem oder mehreren der Ansprüche 1 bis 13, dadurch **gekennzeichnet,** daß der Referenzspeicher (15) zusätzlich die Muster von Panzern und Fahrzeugen enthält.

15. Sensor nach einem odeer mehreren der Ansprüche 1 bis 14, dadurch **gekennzeichnet,** daß nach Überschreiten des Zielentfernungsbereiches oder nach Unterschreitung einer Mindestflughöhe $H_{min}$ des Geschosses (30) im Referenzspeicher (15) auch die Referenzmuster von Panzern und Fahrzeugen aktiviert werden.

16. Sensor nach einem oder mehreren der Ansprüche 1 bis 15, dadurch **gekennzeichnet,** daß nach Überschreiten des Zielentfernungsbereiches oder nach Unterschreitung einer Mindestflughöhe $H_{min}$ des Geschosses (30) der Rechner (13) geänderte Zielkriterien aktiviert.

17. Sensor nach einem oder mehreren der Ansprüche 1 bis 16, dadurch **gekennzeichnet,** daß die Zielkriterien über die Schnittstelle (18) aktiviert werden.

18. Sensor nach einem oder mehreren der Ansprüche 1 bis 17, dadurch **gekennzeichnet,** daß der Gefechtskopf (31) mit einem Metallsensor (39) ausgerüstet ist, der bei Vorbeiflug im Nächstbereich des Hubschraubers (40) über den Rechner (13) die Zündeinheit (32) aktiviert, wobei der Rechner (13) die Wirkrichtung der Wirkladung (33) des Gefechtskopfes (31) in die Richtung der kleinsten mit einem der LEM (11) gemessenen Entfernung ausrichtet.

19. Sensor nach einem oder mehreren der Ansprüche 1 bis 18, dadurch **gekennzeichnet,** daß der Referenzspeicher (15) den typischen Drehzahlbereich und die Drehrichtung verschiedener Typen von Hubschraubern (40) enthält.

**Claims**

1. Sensor in the warhead of a missile for attacking helicopters on or near the ground surface, whereby the sensor emits electro-magnetic waves and operates by the reflection principle, characterised in that the sensor (10) is composed of one or more laser rangefinder (LEM) (11), which is/are tilted in the forward flight direction and offer(s) high resolution relative to time and space so as to detect individual rotor blades even whilst they are rotating, and having associated therewith (LEM) evaluation unit (12) with clock (14) and computer (13), which determines from the signals (21) which have been scattered back by the rotor blades (42) and the fuselage (44) of the located helicopter (40) and from the "speed/flight time-profile" of the missile (30), stored in the cinematic store (16), the direction, range and position by way of pattern recognition based on reference patterns stored in the reference store (15) and on the time elapsed since the launch of the missile (30), and thus determines the presence and the type of the located helicopter (40), and which activates the ignition unit (32) of the alignable effective charge (33).

2. Sensor according to claim 1, characterised in that the reference store (15) memorises the number, length and breadth or rotor blades (42) of different types of helicopters (40).

3. Sensor according to claim 1 or 2, characterised in that the computer (13) then interprets the signals (22) of the laser rangefinder (11) as signals (21) scattered back by a helicopter (40), if they meet all or some of the target criteria, namely
   (a) when the signals (22) indicate at least two or more distance leaps (24) of at least the size $H_{min}$;
   (b) when at least two of the object distances (25) measured during the distance leaps (24) are virtually equal;
   (c) when the intensities I(t) measured according to b) are virtually equal;
   (d) when the measured intensities I(t) reveal virtually equal, equal-shaped time behaviour;
   (e) when the lengths (26) and distances (27) of the objects indicated according to b) correspond sufficiently well with a possible scanning track (23) of the rotor (41) of a helicopter type stored in the reference store (15).

4. Sensor according to claim 3, characterised in that the computer (13) checks the target criteria of claim 3 d) by algebraic calculation based on the measured lengths (26) and distances (27) and the length, breadth and number of rotor blades (42) of the respective helicopter type, calculates the position of the rotor centre (43) and, if appropriate, activates the ignition unit (32).

5. Sensor according to claims 1 to 4, characterised in that the range of rangefinder (11) is increased to at least the typical flight altitude (38) of the missile (30) by post-integration (19) of the signals (22) of the rangefinder.

6. Sensor according to claims 1 to 5, characterised in that the computer (13) calculates the momentary mean flight altitude (38) of the missile (30) above ground (50) and the respective viewing direction of the rangefinder (11) by way of time behaviour of the signals (22) after post-integration (19) of one or several rangefinder(s) (11).

7. Sensor according to claims 1 to 6, characterised in that the computer (13) determines the direction and distance to the fuselage (44) by way of the position of the rotor centres (43) and its distance from the fuselage centre (44) from the viewing direction of the rangefinder (11).

8. Sensor according to one or more of claims 1 to 7, characterised in that the effective charge (33) of the warhead (31) is alignable, and that the computer (13) can optimise the time and the effective direction of ignition and activate the ignition unit (32) accordingly, based on the result of the pattern recognition.

9. Sensor according to one or more of claims 1 to 8, characterised in that the launching device (34) and the missile (30) are provided with an interface (18) for data transfer to the sensor (10) prior to or during the launch.

10. Sensor according to one or more of claims 1 to 9, characterised in that the interface (18) for the data transfer is a series interface which is operated via an electrical contact (18a) on the missile (30).

11. Sensor according to one or more of claims 1 to 10, characterised in that the known target range is transferred via the interface (18).

12. Sensor according to one or more of claims 1 to 11, characterised in that the ignition unit (32) is blocked prior to arrival in the target range.

13. Sensor according to one or more of claims 1 to 12, characterised in that one or more reference pattern(s) in the reference store (15) for helicopter types is/are activated via the interface (18) for subsequent pattern recognition.

14. Sensor according to one or more of claims 1 to 13, characterised in that the reference store (15) additionally holds patterns of tanks and vehicles.

15. Sensor according to one or more of claims 1 to 14, characterised in that the reference patterns of tanks and vehicles in the reference store (15) are also activated after having exceeded the target range or after having gone below a minimum flight altitude $H_{min}$ of the missile (30).

16. Sensor according to one or more of claims 1 to 15, characterised in that the computer (13) activates changed target criteria after having exceeded the target or after having gone below a minimum flight altitude $H_{min}$ of the missile (30).

17. Sensor according to one or more of claims 1 to 16, characterised in that the target criteria are activated via the interface (18).

18. Sensor according to one or more of the claims 1 to 17, characterised in that the warhead (31) is equipped with a metal sensor (39) which activates the ignition device (32) via the computer (13) whilst passing in the close vicinity of the helicopter (40), whereby the computer (13) aligns the effective direction of the effective charge (33) of the warhead (31) in the direction of the shortest distance measured by the rangefinder (11).

19. Sensor according to one or more of claims 1 to 18, characterised in that the reference store (15) holds the typical revolution range and the direction of rotation of different types of helicopters (40).

**Revendications**

1. Détecteur pour une tête militaire d'une munition pour la lutte contre des hélicoptères au sol ou à proximité de la surtace du sol, le détecteur émettant des ondes électromagnétiques et travaillant selon le principe de la réflexion, caractérisé en ce que le détecteur (10) est composé d'un ou plusieurs télémètre(s) à laser (11) inclinés vers l'avant dans la direction de vol (37), qui ont une résolution dans le temps et dans l'espace telle qu'elle permet de détecter les pales du rotor, même lors de la rotation de celui-ci, et est muni d'une unité d'exploitation (12) associée auxdits télémètres à laser comportant une horloge (14) et un calculateur (13) qui détermine, à partir des signaux (21) réfléchis par les pales du rotor (42) et le fuselage (44) de l'hélicoptère (40) repéré et à partir du "diagramme vitesse/durée de vol" de la munition (30) mémorisé dans une mémoire de cinématique, par reconnaissance de modèles à l'aide de modèles de référence stockés dans la mémoire de référence (15), et du temps écoulé depuis le tir de la munition (30), la direction, la distance, la position et de là la présence et le type de l'hélicoptère repéré (40) et active en conséquence l'unité de mise à feu (32) de la charge active (33) dirigeable.

2. Détecteur selon la revendication 1, caractérisé en ce que la mémoire de modèle (15) contient le nombre, la longueur et la largeur des pales de rotor (42) de différents types d'hélicoptères (40).

3. Détecteur selon la revendication 1 ou 2, caractérisé en ce que le calculateur (13) interprète les signaux (22) du télémètre à laser (11) comme des signaux (21) renvoyés par un hélicoptère (40), chaque fois que ceux-ci satisfont l'ensemble ou plusieurs des caractéristiques de l'objectif, à savoir:
   a) lorsque les signaux (22) indiquent au moins deux ou plusieurs sauts de distance (24) dont la valeur est au moins $H_{min}$,
   b) lorsqu'au moins deux des distances de l'objet (25) mesurées à l'intérieur des sauts de distance (24) sont sensiblement égales,
   c) lorsque les intensités I(t) mesurées selon b) ont sensiblement la même valeur,
   d) lorsque les intensités I(t) mesurées ont sensiblement le même comportement constant dans le temps,
   e) lorsque les longueurs (26) et les intervalles (27) des objets affichés selon b) correspondent avec une précision suffisante à une trace de balayage (23) possible du rotor (41) d'un type d'hélicoptère contenu dans la mémoire de référence (15).

4. Détecteur selon la revendication 3, caractérisé en ce que le calculateur (13) contrôle la caractéristique de l'objectif de la revendication 3e) par calcul algébrique à partir des longueurs (26) et des distances (27) mesurées ainsi que de la longueur, de la largeur et du nombre des pales de rotor (42) du type d'hélicoptère concerné, calcule la position du centre du rotor (43) et active le cas échéant l'unité de mise à feu (32).

**5.** Détecteur selon les revendications 1 à 4, caractérisé en ce que, par intégration (19) des signaux (22) du télémètre à laser (11), on augmente sa portée au minimum jusqu'à l'altitude de vol (38) caractéristique de la munition (30).

**6.** Détecteur selon les revendications 1 à 5, caractérisé en ce que le calculateur (13) calcule, à partir de l'évolution dans le temps des signaux (22) après l'intégration (19) d'un ou plusieurs télémètres à laser (11), l'altitude de vol (38) moyenne instantanée de la munition (30) par rapport au sol (50) ainsi que la direction de visée correspondante du télémètre à laser (11).

**7.** Détecteur selon les revendications 1 à 6, caractérisé en ce que le calculateur (13) détermine, à partir de la position du centre du rotor (43), sa distance par rapport au milieu du fuselage (44), et à partir de la direction de visée du télémètre à laser (11), la direction et la distance du fuselage (44).

**8.** Détecteur selon une plusieurs des revendications 1 à 7, caractérisé en ce que la charge active (33) de la tête militaire (31) est dirigeable et le calculateur (13) optimise, en fonction du résultat de la reconnaissance du modèle, l'instant de mise à feu et la direction d'action et active en conséquence l'unité de mise à feu.

**9.** Détecteur selon une plusieurs des revendications 1 à 8, caractérisé en ce que l'installation de tir (34) et la munition (30) sont équipées d'une interface (18) pour la transmission de données avant et pendant le tir.

**10.** Détecteur selon une plusieurs des revendications 1 à 9, caractérisé en ce que l'interface (18) pour la transmission de données est une interface série pilotée par l'intermédiaire d'un contact électrique (18a) sur la munition (30).

**11.** Détecteur selon une plusieurs des revendications 1 à 10, caractérisé en ce que la plage de distance connue de l'objectif est transmise par l'intermédiaire de l'interface (18).

**12.** Détecteur selon une plusieurs des revendications 1 à 11, caractérisé en ce que l'unité de mise à feu (32) est bloquée tant que la plage de distance de l'objectif n'est pas atteinte.

**13.** Détecteur selon une plusieurs des revendications 1 à 12, caractérisé en ce qu'on active par l'intermédiaire de l'interface (18) un ou plusieurs modèles de référence dans la mémoire de référence (15) de types d'hélicoptères pour la reconnaissance de modèle ultérieure.

**14.** Détecteur selon une plusieurs des revendications 1 à 13, caractérisé en ce que la mémoire de référence (15) contient en outre les modèles de chars et de véhicules.

**15.** Détecteur selon une plusieurs des revendications 1 à 14, caractérisé en ce que, lorsque la plage de distance de l'objectif est dépassée ou au-dessous d'une altitude de vol minimale $H_{min}$ de la munition (30), le modèle de référence de chars et de véhicules est activé dans la mémoire de référence (15).

**16.** Détecteur selon une plusieurs des revendications 1 à 15, caractérisé en ce que, lorsque la plage de distance de l'objectif est dépassée ou au-dessous d'une altitude de vol minimale $H_{min}$ de la munition (30), le calculateur (13) active des caractéristiques de cible modifiées.

**17.** Détecteur selon une plusieurs des revendications 1 à 16, caractérisé en ce que les caractéristiques de cible sont activées par l'intermédiaire de l'interface (18).

**18.** Détecteur selon une plusieurs des revendications 1 à 17, caractérisé en ce que la tête militaire (31) est équipée d'un détecteur de métaux (39) qui active, par l'intermédiaire du calculateur (13), l'unité de mise à feu (32) lorsque la tête militaire passe à proximité immédiate de l'hélicoptère (40), le calculateur (13) réglant la direction d'action de la charge active (33) de la tête militaire (31) dans la direction de la plus faible distance mesurée par l'un des télémètres à laser (11).

**19.** Détecteur selon une plusieurs des revendications 1 à 18, caractérisé en ce que la mémoire de référence (15) contient la plage de vitesses caractéristique et le sens de rotation de différents types d'hélicoptères (40).

EP 0 281 675 B1

FIG. 1

FIG. 2

FIG. 3

FIG. 5

14  13  19  22  11  11b  21
UHR | RECH-NER | INT | LEM | 20 11a

16
KINEMATIK-SPEICHER | INT | LEM | 11b 11a

33  32
ZÜNDZEIT ISOTROP GERICHTET | ZÜND-EINHEIT

11  11a  11b
INT | LEM | 11a

15
REFERENZ-SPEICHER

17
ZIEL-KRITERIEN-SPEICHER | METALL-DETEKT. | 39

10
18
SCHNITT-STELLE | 12

36  35  34
EIN-GABE | ZIELEIN-RICHTUNG | 18a
30

EP 0 281 675 B1

FIG. 4a

R(t)

LEM-
ENTFERNUNGS-SIGNAL
SIGNAL

24          22a

38    25    26    LEM-
ABTAST-
SPUR 23

12    t

FIG. 4b

27

I(t)

LEM-
INTENSITÄTS-
SIGNAL

22b

23

t